# EUROPEAN PATENT SPECIFICATION

(11) **EP 3 743 616 B1**
(45) Date of publication and mention of the grant of the patent: **16.03.2022**
(21) Application number: 18701780.1
(22) Date of filing: 23.01.2018
(51) Int. Cl.: F02M 45/08, F02M 61/18, F02B 31/08, F02B 23/10, F02B 23/06, F02D 41/30, F02M 61/14

(54) **FUEL INJECTION ARRANGEMENT AND METHOD OF OPERATING PISTON ENGINE**
KRAFTSTOFFEINSPRITZANORDNUNG UND VERFAHREN ZUM BETRIEB EINES KOLBENMOTORS
AGENCEMENT D'INJECTION DE CARBURANT ET PROCÉDÉ DE FONCTIONNEMENT D'UN MOTEUR À PISTON

(43) Date of publication of application: 02.12.2020
(73) Proprietor: Wärtsilä Finland Oy, 65100 Vaasa (FI)
(72) Inventor: CAFARI, Alberto, 34018 Trieste (IT); EKLUND, Kjell, 65100 Vaasa (FI); ENGSTRÖM, Jesper, 65100 Vaasa (FI); GRÖNLUND, Fredrik, 65100 Vaasa (FI); SEPPÄ, Jussi, 65100 Vaasa (FI); JAY, David, 65100 Vaasa (FI)
(74) Representative: Berggren Oy
(86) International application number: PCT/FI2018/050051
(87) International publication number: WO 2019/145592

(56) References cited:
- EP-A1- 2 949 916
- DE-A1- 2 121 121
- DE-A1- 19 853 375
- DE-U1-202016 104 439
- US-A1- 2008 210 198
- US-A1- 2013 311 067

## Description

### Technical field of the invention

The present invention relates to a fuel injection arrangement for a cylinder of a four-stroke piston engine in accordance with claim 1. The invention also concerns a method of operating a piston engine as defined in the other independent claim.

### Background of the invention

A common trend in the development of piston engines is that the ratio between the output power and the cylinder volume is continuously growing. This helps increasing the thermal efficiency of the engines. However, a consequence of this development is that modern four-stroke engines need to withstand very high thermal loads. In some cases, the thermal load of the components of combustion chambers may be a limiting factor, which prevents increasing of the output power of an engine. Alternatively, substantial modifications in the engine design may be required, for instance in the form of more effective cooling systems, or the materials of some components need to be replaced by materials with good thermal resistance. This naturally increases the manufacturing costs.

DE 198 53 375 A1 discloses a fuel injection arrangement for a cylinder of a four-stroke piston engine.

### Summary of the invention

An object of the present invention is to provide an improved fuel injection arrangement for a cylinder of a four-stroke piston engine, the cylinder being provided with two intake valves, which are arranged on an intake valve side of an imaginary plane that is parallel to the axial direction of the cylinder and divides the cylinder into two sections, and with two exhaust valves, which are arranged on an exhaust valve side of said imaginary plane.

One aspect of the invention provides a fuel injection arrangement according to claim 1. Another object of the invention is to provide an improved method of operating a piston engine according to claim 14.

The fuel injection arrangement according to the invention comprises a first fuel injection nozzle comprising a plurality of nozzle holes, a second fuel injection nozzle comprising a plurality of nozzle holes, a first injector needle for controlling fuel injection through the first nozzle, and a second injector needle for controlling fuel injection through the second nozzle. The total cross-sectional area of the nozzle holes of the second nozzle is greater than the total cross-sectional area of the nozzle holes of the first nozzle, and the nozzle holes of the second nozzle are arranged so that a greater part of the fuel injected through the second nozzle is injected towards the intake valve side than towards the exhaust valve side of the cylinder.

In the method according to the invention, fuel is injected into the cylinder using only the first nozzle when the engine load is below a predetermined limit value and fuel is injected into the cylinder using at least the second nozzle when the engine load is above the predetermined limit value.

Peak temperatures are often experienced in a limited area around the exhaust valves. By means of the fuel injection arrangement and the method according to the invention, thermal loads around the exhaust valves can be reduced. Often the thermal loads of the rest of the combustion chamber components are well below their design limits, and therefore relatively small changes in the design of the fuel injectors may allow increasing of the output power without a need of redesigning other components.

According to an embodiment of the invention, the nozzle holes of the second nozzle are configured so that at least 55 percent of the fuel injected through the second nozzle is injected towards the intake valve side of the cylinder.

According to an embodiment of the invention, the nozzle holes of the second nozzle are configured so that at least 60 percent of the fuel injected through the second nozzle is injected towards the intake valve side of the cylinder.

According to an embodiment of the invention, the nozzle holes of the second nozzle are configured so that at least 65 percent of the fuel injected through the second nozzle is injected towards the intake valve side of the cylinder.

According to an embodiment of the invention, the nozzle holes of the second nozzle are configured so that at most 75 percent of the fuel injected through the second nozzle is injected towards the intake valve side of the cylinder. By injecting part of the fuel towards the exhaust valve side, structural stresses of the second nozzle can be reduced.

According to an embodiment of the invention, the nozzle holes of the second nozzle are configured so that at most 70 percent of the fuel injected through the second nozzle is injected towards the intake valve side of the cylinder.

According to an embodiment of the invention, the spray pattern of the fuel injected through the second nozzle is asymmetric in respect of the imaginary plane.

According to an embodiment of the invention, the spray pattern of the fuel injected through the second nozzle is asymmetric in respect of a center plane of the second nozzle, which center plane is parallel to the imaginary plane dividing the cylinder into two sections.

According to an embodiment of the invention, the first nozzle is located on the exhaust valve side and the second nozzle is located on the intake valve side of the imaginary plane. Since the main fuel injection direction from the second nozzle is towards the intake valve side, the fuel injection is disturbed less when the first nozzle is located on the exhaust valve side.

According to an embodiment of the invention, a greater number of nozzle holes of the second nozzle face the intake valve side than the exhaust valve side of the cylinder.

According to an embodiment of the invention, each of those nozzle holes of the second nozzle that face the intake valve side has a greater cross-sectional area than any of those nozzle holes of the second nozzle that face the exhaust valve side of the cylinder.

According to an embodiment of the invention, the individual cross-sectional areas of those nozzle holes of the second nozzle that face the exhaust valve side are 5-20 percent smaller than the individual cross-sectional areas of those nozzle holes of the second nozzle that face the intake valve side of the cylinder.

According to an embodiment of the invention, the imaginary plane divides the cylinder into two halves of equal size.

According to an embodiment of the invention, the angle between a radial direction of the cylinder and the injection direction of those nozzle holes of the second nozzle that face the exhaust valve side of the cylinder is different than the angle between the radial direction of the cylinder and the injection direction of those nozzle holes of the second nozzle that face the intake valve side of the cylinder.

According to an embodiment of the invention, the angle between a radial direction of the cylinder and the injection direction of those nozzle holes of the second nozzle that face the exhaust valve side of the cylinder is greater than the angle between the radial direction of the cylinder and the injection direction of those nozzle holes of the second nozzle that face the intake valve side of the cylinder. This helps further decreasing the peak temperatures on the exhaust valve side.

According to an embodiment of the invention, the angle between a radial direction of the cylinder and the injection direction of those nozzle holes of the second nozzle that face the exhaust valve side of the cylinder is at least 2 degrees greater than the angle between a radial direction of the cylinder and the injection direction of those nozzle holes of the second nozzle that face the intake valve side of the cylinder.

According to an embodiment of the invention, the difference in the angles of the injection directions of the intake valve side and the exhaust valve side is in the range of 2-10 degrees.

According to an embodiment of the invention, the nozzle holes of the first nozzle are arranged so that a greater part of the fuel injected through the first nozzle is injected towards the exhaust valve side than towards the intake valve side of the cylinder. This helps increasing the exhaust gas temperature at low engine loads, which boosts the operation of the turbochargers and selective catalytic reduction systems.

According to an embodiment of the invention, the nozzle holes of the first nozzle are configured so that at least 60 percent of the fuel is injected towards the exhaust valve side. According to another embodiment of the invention, the nozzle holes of the first nozzle are configured so that at least 75 percent of the fuel is injected towards the exhaust valve side.

In the method according to an embodiment of the invention, the fuel is injected into the cylinder using only the second nozzle when the engine load is above the predetermined limit value.

According to an embodiment of the invention, the predetermined limit value is in the range of 30-60 percent of the rated output power of the engine. If the first fuel injection nozzle is optimized for part loads, at loads above 60 percent of the rated power of the engine the fuel injection duration becomes too long, which leads to poor combustion and excessive exhaust gas temperature.

According to an embodiment of the invention, the predetermined limit value is in the range of 50-60 percent of the rated output power of the engine. By using only the first fuel injection nozzle up to loads of 50-60 percent, NOₓ emissions at part loads can be effectively reduced. In addition, the second fuel injection nozzle can be better optimized for higher loads.

### Brief description of the drawings

Embodiments of the invention are described below in more detail with reference to the accompanying drawings, in which
Fig. 1 shows a cross-sectional view of a fuel injection unit of a piston engine,
Fig. 2 shows another cross-sectional view of the fuel injection unit of Fig. 1,
Fig. 3 shows the fuel injection unit of Fig. 1 in connection with a cylinder of a piston engine,
Fig. 4 shows a simplified cross-sectional view of a nozzle of a fuel injector,
Fig. 5 shows another cross-sectional view of a nozzle of a fuel injector,
Fig. 6 shows an example of a fuel injection pattern of a fuel injector, and
Fig. 7 shows another example of a fuel injection pattern of a fuel injector.

### Description of embodiments of the invention

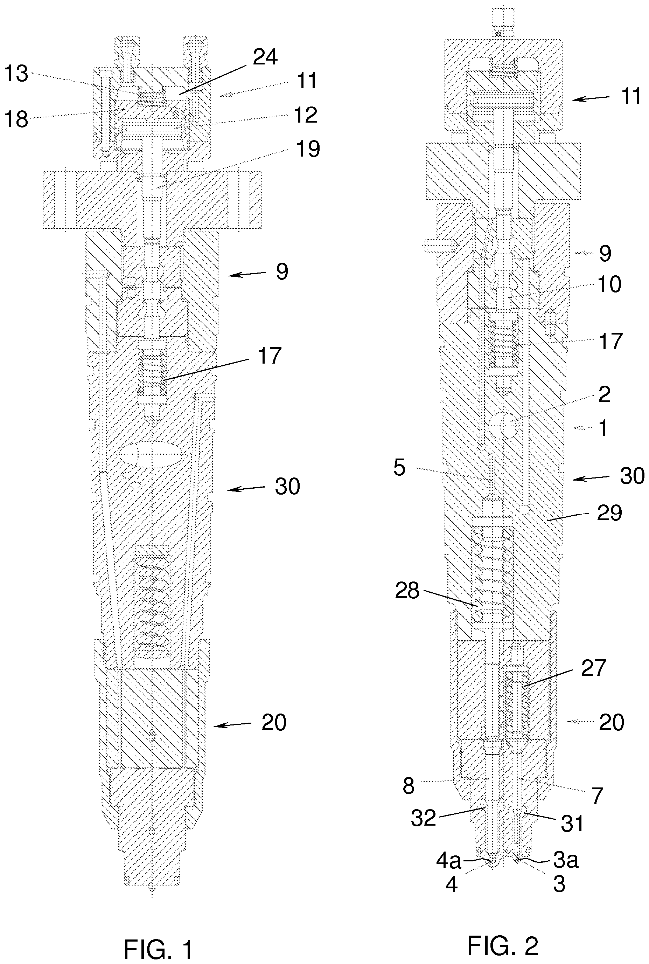

Figures 1 and 2 show a fuel injection unit 1 for a large internal combustion engine, such as an engine that is used in a ship or at a power plant. The cylinder bore of the engine is at least 150 mm. The engine is a multi-cylinder four-stroke piston engine. The engine can be operated using liquid fuel that is injected directly into the cylinders of the engine. Each cylinder of the engine is provided with a piston, which is arranged to move in a reciprocating manner within the cylinder.

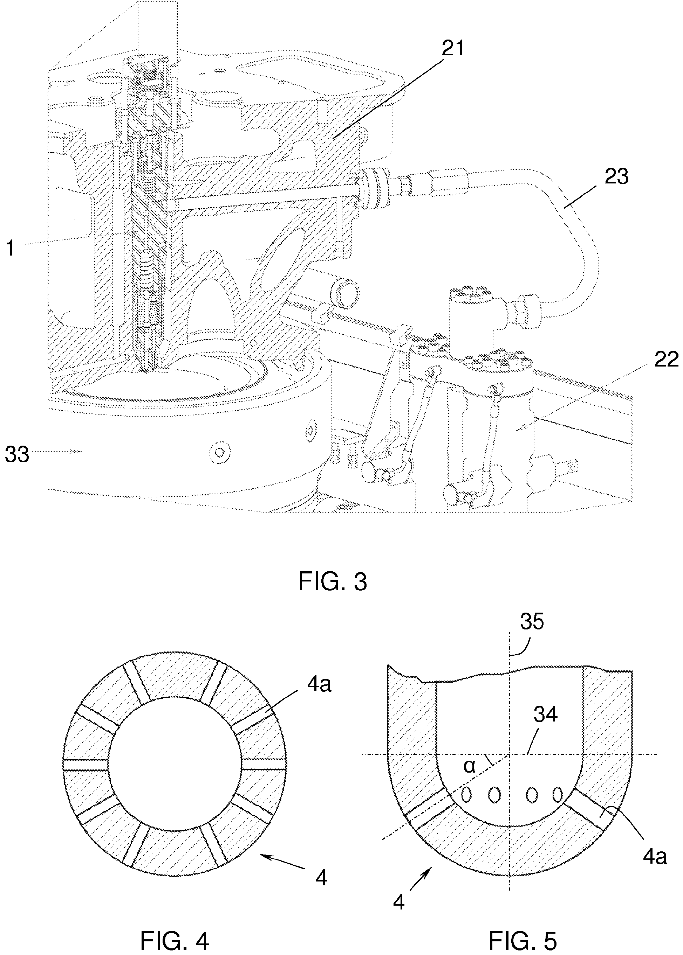

Each cylinder of the engine is provided with a similar fuel injection unit 1. In figure 3 the fuel injection unit 1 of figures 1 and 2 is shown in connection with a cylinder head 21 of an internal combustion engine. The fuel injection unit 1 of figures 1 to 3 is arranged to receive pressurized fuel directly from a fuel injection pump 22. The fuel injection unit 1 comprises an injector part 20, a middle part 30, a control valve 9 and a pneumatic actuator 11. The fuel injection unit 1 is connected to the fuel injection pump 22 by means of a fuel delivery duct 23. Each cylinder 33 of the engine is provided with an own fuel injection pump 22. The fuel injection pump 22 is a high-pressure pump that comprises means for controlling injection timing and the amount of the injected fuel.

The fuel injection unit 1 comprises a body 29, which can consist of several parts. Two fuel injection nozzles 3, 4 are arranged in the injector part 20 of the fuel injection unit 1. The first fuel injection nozzle 3 is intended for injecting small amounts of fuel and the second fuel injection nozzle 4 is intended for injecting large amounts of fuel into a cylinder 33 of the engine. The same kind of fuel is injected through both fuel injection nozzles 3, 4. Both fuel injection nozzles 3, 4 are configured to inject liquid fuel, such as light fuel oil or heavy fuel oil. The first fuel injection nozzle 3 can be used for instance when the engine load is 50 percent or less of the maximum load of the engine, and the second fuel injection nozzle 4 can be used when the engine load is more than 50 percent of the maximum load. It is also possible that both nozzles 3, 4 are used at high engine loads. Conventionally, fuel injection nozzles have been optimized for the full load, which has led to higher fuel consumption and smoke formation at part load. Also NOx, CO and hydrocarbon emissions have been higher. With two different fuel injection nozzles 3, 4, each nozzle can be optimized for different engine loads. It is thus possible to achieve high engine efficiency and low emissions at low loads, while avoiding too long fuel injection durations at higher loads.

A first fuel gallery 31 is arranged inside the body 29 of the fuel injection unit 1 upstream from the first fuel injection nozzle 3, and a second fuel gallery 32 is arranged upstream from the second fuel injection nozzle 4. The fuel galleries 31, 32 are used for storing the fuel before injection. The fuel injection unit 1 further comprises a first injector needle 7 and a second injector needle 8. The first injector needle 7 opens and closes flow communication between the first fuel gallery 31 and the first fuel injection nozzle 3. The second injector needle 8 opens and closes flow communication between the second fuel gallery 32 and the second fuel injection nozzle 4. The diameter of the first injector needle 7 is smaller than the diameter of the second injector needle 8. Therefore, also the flow area past the first injector needle 7 is smaller than the flow area past the second injector needle 8. The injector needles 7, 8 are pushed towards their closed positions by springs 27, 28. The injector needles 7, 8 are actuated by the pressure of the fuel that is supplied to the fuel injection unit 1 by the fuel injection pump 22. The fuel injection unit 1 further comprises leakage bores 5 for draining leakages out of the injection unit 1.

For choosing through which of the fuel injection nozzles 3, 4 the fuel is injected into the cylinder 33, the fuel injection unit 1 is provided with a control valve 9. The control valve 9 comprises an inlet port that is in flow communication with a fuel inlet 2 of the fuel injection unit 1. The fuel delivery duct 23 from the fuel injection pump 22 is connected to the fuel inlet 2 of the fuel injection unit 1. The control valve 9 further comprises two outlet ports. A first outlet port is connected to a first fuel duct that connects the control valve 9 to the first fuel gallery 31, and a second outlet port is connected to a second fuel duct that connects the control valve 9 to the second fuel gallery 32. The control valve 9 comprises a valve member 10 that has at least two different positions. In a first position of the valve member 10, fuel flow from the inlet port through the first outlet port to the first fuel duct is allowed. Fuel flow from the inlet port to the second outlet port is prevented. In a second position of the valve member 10, fuel flow from the inlet port through the second fuel port to the second fuel duct is allowed. Fuel flow from the inlet port to the first outlet port is prevented. The valve member 10 can have also a third position, in which flow both to the first fuel duct and the second fuel duct is allowed. The control valve 9 comprises a spring 17 that pushes the valve member 10 towards the second position. The control valve 9 is thus biased to a position, in which fuel injection through the second fuel injection nozzle 4 is allowed.

Instead of being integrated into the fuel injection unit 1, the control valve 9 could also be integrated into the fuel injection pump 22. In that case, separate fuel delivery ducts would be needed for the first fuel injection nozzle 3 and the second fuel injection nozzle 4. A first fuel delivery duct from the first outlet port of the control valve 9 would be connected to the first fuel duct of the fuel injection unit 1 and a second fuel delivery duct from the second outlet port would be connected to the second fuel duct.

For selecting the position of the control valve 9, the fuel injection unit 1 is provided with an actuator. In the embodiment of the figures, the actuator is a pneumatic actuator 11. However, also other types of actuators could be used, for instance mechanic, hydraulic or electric actuators. In the embodiment of the figures, the actuator 11 comprises a first piston 18 that is arranged in a cylindrical chamber 24. A second piston 12 is arranged inside the first piston 18. The second piston 12 is provided with a rod 19 that is contact with the valve member 10 of the control valve 9. When the pneumatic actuator 11 is not activated, the spring 17 of the control valve 9 pushes via the valve member 10 of the control valve 9 the rod 19 of the second piston 12 upwards. The second piston 12 pushes also the first piston 18 upwards. A spring 13 is arranged above the first piston 18 for pressing the first piston 18 downwards. The spring 13 keeps the first piston 18 in contact with the second piston 12 and the rod 19 of the second piston 12 in contact with the valve member 10 of the control valve 9 even when the pneumatic actuator 11 is not activated. When pressurized air is introduced between the first piston 18 and the second piston 12, the second piston 12 is pushed downwards, i.e. towards the control valve 9. The rod 19 of the second piston 12 pushes the valve member 10 of the control valve 9 to the first position. This position is used when the engine is operated at low load, for instance at load that is 50 percent or less of the maximum power of the engine.

When pressurized air is introduced into the chamber 24 above the first piston 18, the first piston 18 is pushed downwards, i.e. towards the control valve 9. The first piston 18 pushes also the second piston 12 downwards, and the rod 19 of the second piston 12 pushes the valve member 10 of the control valve 9 to the third position. The third position can be used occasionally to prevent sticking of the injector needles 7, 8. For instance, when the engine is operated for a long period of time at high load, the control valve 9 can be switched to the third position for a short period of time to allow fuel injection also through the first nozzle 3. This flushing can take place according to a predetermined schedule.

Figure 4 shows a simplified cross-sectional view of the second nozzle 4 seen from the direction of the cylinder head 21. Fig. 5 shows a cross-sectional side view of the second nozzle 4. The second nozzle 4 comprises a plurality of nozzle holes 4a. Preferably, the second nozzle 4 comprises at least four nozzle holes 4a. In the example of figure 4, the second nozzle 4 comprises ten nozzle holes 4a. Through the nozzle holes 4a, fuel is injected directly into a combustion chamber of the engine. The nozzle holes 4a are distributed along the perimeter of the second nozzle 4 so that each nozzle hole 4a injects fuel to a different direction seen in a plane that is perpendicular to the axial direction of the cylinder 33. Fuel is injected through the nozzle holes 4a towards the walls of the cylinder 33. Each nozzle hole 4a is arranged at an angle α in respect of a plane 34 that is perpendicular to the axial direction 35 of the cylinder 33. The nozzle holes 4a are tilted towards the piston. Fuel is thus injected away from the cylinder head 21. Angle α between the fuel injection direction and the radial plane 34 does not need to be the same for each nozzle hole 4a, but the nozzle holes 4a may be in different angles in respect of the radial direction of the cylinder 33.

The first nozzle 3 is similar to the second nozzle 4. However, the total cross-sectional area of the nozzle holes 3a of the first nozzle 3 is smaller than the total cross-sectional area of the nozzle holes 4a of the second nozzle 4. The second nozzle 4 may comprise more nozzle holes 4a than the first nozzle 3 and/or the nozzle holes 4a of the second nozzle 4 may be bigger than the nozzle holes 3a of the first nozzle 3. The second nozzle 4 is thus configured to inject larger amounts of fuel than the first nozzle 3.

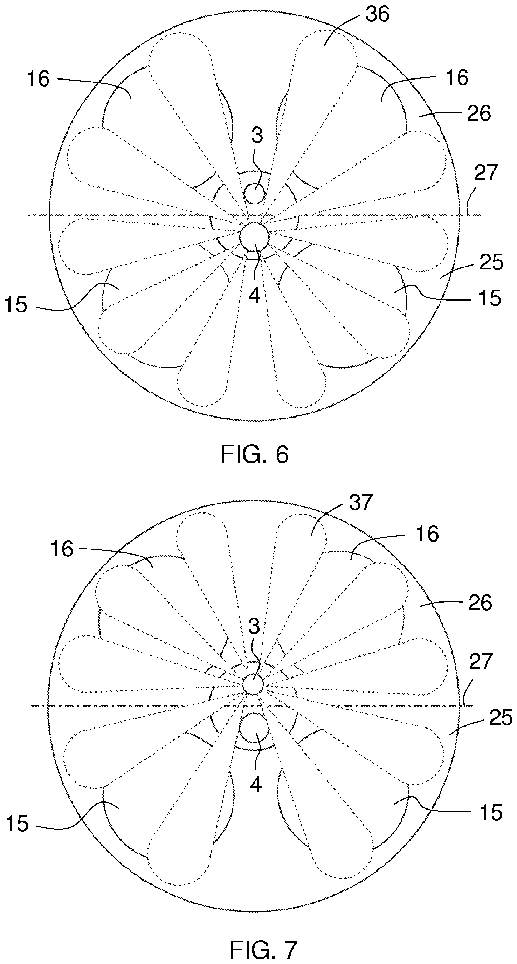

Figure 6 shows an example of the spray pattern of the second fuel injection nozzle 4. Jets 36 from the nozzle holes 4a are illustrated by the forms 36 with dashed lines. Each cylinder 33 of the engine is provided with two intake valves 15 and two exhaust valves 16. An imaginary plane 27, which is parallel to the axial direction of the cylinder 33, divides the cylinder 33 into two sections 25, 26. The intake valves 15 are located on the intake valve side 25 of the imaginary plane 27 and the exhaust valves 16 are located on the exhaust valve side 26 of the imaginary plane 27. In the embodiment of the figures, the imaginary plane 27 divides the cylinder 33 into two halves of equal size. However, the imaginary plane 27 does not need to be a center plane of the cylinder 33. For instance, the diameter of the intake valves 15 may be bigger than the diameter of the exhaust valves 16. The intake valve side 25 may thus be bigger than the exhaust valve side 26. The imaginary plane 27 can thus be offset from the center plane of the cylinder 33.

According to the invention, the nozzle holes 4a of the second nozzle 4 are arranged so that a greater part of the fuel injected through the second nozzle 4 is injected towards the intake valve side 25 than towards the exhaust valve side 26 of the cylinder 33. Hot exhaust gas is discharged through the exhaust valves 16, whereas cooler intake air is introduced into the cylinder 33 through the intake valves 15. Therefore, the exhaust valve side 26 of the cylinder 33 typically experiences higher temperatures than the intake valve side 25. By injecting more fuel towards the intake valve side 25 than towards the exhaust valve side 26, temperature differences can be decreased and lower peak temperatures are experienced on the exhaust valve side 26. With relatively simple changes in the construction of the fuel injection system, thermal loads of the components of the engine can thus be reduced without a need for redesigning the cooling system of the engine.

According to an embodiment of the invention, the nozzle holes 4a of the second nozzle 4 are configured so that at least 55 percent of the fuel injected through the second nozzle 4 is injected towards the intake valve side 25 of the cylinder 33. According to another embodiment of the invention, at least 60 percent of the fuel is injected towards the intake valve side 25. According to still another embodiment of the invention, at least 65 percent of the fuel is injected towards the intake valve side 25. However, preferably part of the fuel is injected to the exhaust valve side 26. This helps reducing structural stresses of the fuel injector. According to an embodiment of the invention, the nozzle holes 4a of the second nozzle 4 are configured so that at most 75 percent of the fuel injected through the second nozzle 4 is injected towards the intake valve side 25 of the cylinder 33. According to another embodiment of the invention, at most 70 percent of the fuel is injected towards the intake valve side 25.

Larger fuel injection amounts on the intake valve side 25 can be achieved in many different ways. For instance, a greater number of nozzle holes 4a of the second nozzle 4 can face the intake valve side 25 than the exhaust valve side 26 of the cylinder 33, as shown in figure 6. Figure 4 shows a corresponding nozzle 4. In the embodiment of figure 6, six fuel jets 36 are directed towards the intake valve side 25. Four fuel jets 36 are directed towards the exhaust valve side 26 of the cylinder 33. Alternatively or in addition to that, the nozzle holes 4a facing the intake valve side 25 can be larger than the nozzle holes 4a facing the exhaust valve side 26. Each of those nozzle holes 4a of the second nozzle 4 that face the intake valve side 25 can have a greater cross-sectional area than any of those nozzle holes 4a of the second nozzle 4 that face the exhaust valve side 26 of the cylinder 33. For instance, the individual cross-sectional areas of those nozzle holes 4a of the second nozzle 4 that face the exhaust valve side 26 can be 5-20 percent smaller than the individual cross-sectional areas of those nozzle holes 4a of the second nozzle 4 that face the intake valve side 25 of the cylinder 33.

In the embodiment of figures 6 and 7, the first fuel injection nozzle 3 is located on the exhaust valve side 26 of the cylinder 33 and the second fuel injection nozzle 4 is located on the intake valve side 25 of the cylinder 33. More fuel is injected from the second nozzle 4 towards the intake valve side 25, and by arranging the first nozzle 3 on the exhaust valve side 26, fuel injection through the second nozzle 4 is disturbed less.

For further decreasing the thermal load around the exhaust valves 16, the fuel jets 36 from the second fuel injection nozzle 4 can be directed more towards the piston on the exhaust valve side 26 than on the intake valve side 25. The angle α between the radial plane 34 and the injection direction of the nozzle holes 4a can be greater for those nozzle holes 4a that face the exhaust valve side 26 of the cylinder 33 than for those nozzle holes 4a that face the intake valve side 25. The nozzle holes 4a facing the exhaust valve side 26 are thus directed more towards the piston than the nozzle holes 4a facing the intake valve side 25. This reduces further the amount of fuel in the proximity of the exhaust valves 16. The injection direction refers to the direction of the center axis of a spray injected through a nozzle hole 4a. The spray can be for example conical, and the injection direction is the direction of the center axis of the cone. As an example, the angle α between the radial plane 34 and the injection direction of those nozzle holes 4a of the second nozzle 4 that face the exhaust valve side 26 of the cylinder 33 can be at least 2 degrees greater than the angle α between the radial plane 34 and the injection direction of those nozzle holes 4a of the second nozzle 4 that face the intake valve side 25 of the cylinder 33. The difference in the angles α of the injection directions of the intake valve side 25 and the exhaust valve side 26 can be for example in the range of 2-10 degrees. The suitable difference in the angles depends mainly on the shape of the piston top. Also the positions of the nozzles 3, 4 can be taken into account. If the second nozzle 4 is located far from the imaginary plane 27, the angle α can be smaller. In some applications, the fuel jets 36 from the second fuel injection nozzle 4 can be directed more towards the piston on the intake valve side 25 than on the exhaust valve side 26. The angle α between the radial plane 34 and the injection direction of the nozzle holes 4a can thus be greater for those nozzle holes 4a that face the intake valve side 25 of the cylinder 33 than for those nozzle holes 4a that face the exhaust valve side 26. This can be the case for example when the second nozzle 4 is located far from the exhaust valve side 26.

According to an embodiment of the invention, the nozzle holes 3a of the first nozzle 3 are arranged so that a greater part of the fuel injected through the first nozzle 3 is injected towards the exhaust valve side 26 than towards the intake valve side 25 of the cylinder 33. The smaller fuel injection nozzle 3 thus injects more fuel towards the exhaust valves 16. At low loads, this increases the exhaust gas temperature, which boosts the operation of turbochargers and selective catalytic reduction systems. Figure 7 shows an example of the spray pattern of the first fuel injection nozzle 3. Also in the case of the first nozzle 3, the different fuel injection amounts on the intake valve side 25 and the exhaust valve side can be achieved in many different ways. For instance, more nozzle holes 3a can face the exhaust valve side 26 than the intake valve side 25 and/or the nozzle holes 3a facing the exhaust valve side 26 can be larger than the nozzle holes 3a facing the intake valve side 25. According to an embodiment of the invention, the first nozzle 3 is configured to inject at least 60 percent of the fuel towards the exhaust valve side 26. According to an embodiment of the invention, the first nozzle 3 is configured to inject at least 75 percent of the fuel towards the exhaust valve side 26.

In a method of operating a piston engine comprising a fuel injection arrangement described above, fuel is injected into the cylinders 33 using only the first nozzle 3 when the engine load is below a predetermined limit value. When the engine load is above the predetermined limit value, fuel is injected into the cylinder 33 using at least the second nozzle 4. When the engine load is above the predetermined limit value, fuel can be injected into the cylinder 33 using only the second nozzle 4. The limit value can be in the range of 30-60 percent of the rated output power of the engine. If the first fuel injection nozzle 3 is optimized for part loads, at loads above 60 percent of the rated power of the engine, the fuel injection duration becomes too long, which leads to poor combustion and excessive exhaust gas temperature. The limit value can be in the range of range of 50-60 percent of the rated output power of the engine. By using only the first fuel injection nozzle 3 up to loads of 50-60 percent, NOₓ emissions at part loads can be effectively reduced. In addition, the second fuel injection nozzle 4 can be better optimized for higher engine loads.

Different variations of the invention are possible. For instance, the first fuel injection nozzle 3 and the second fuel injection nozzle 4 do not need to be arranged in the same fuel injection unit, but each cylinder 33 of the engine can be provided with two separate fuel injectors. The invention can be also applied to an engine with a common rail fuel injection system. Each cylinder 33 of the engine does thus not need to be provided with an own fuel injection pump 22, but one high-pressure pump can supply fuel to fuel injectors of several cylinders 33. The injector needles 7, 8 can be controlled for example electrically.

It will be appreciated by a person skilled in the art that the invention is not limited to the embodiments described above, but may vary within the scope of the appended claims.

## Claims

1. A fuel injection arrangement for a cylinder (33) of a four-stroke piston engine, the cylinder (33) being provided with two intake valves (15), which are arranged on an intake valve side (25) of an imaginary plane (27) that is parallel to the axial direction of the cylinder (33) and divides the cylinder (33) into two sections (25, 26), and with two exhaust valves (16), which are arranged on an exhaust valve side (26) of said imaginary plane (27), the arrangement comprising
- a first fuel injection nozzle (3) comprising a plurality of nozzle holes (3a),
- a second fuel injection nozzle (4) comprising a plurality of nozzle holes (4a),
- a first injector needle (7) for controlling fuel injection through the first nozzle (3), and
- a second injector needle (8) for controlling fuel injection through the second nozzle (4),
wherein
- both fuel injection nozzles (3, 4) are configured to inject liquid fuel directly into the cylinder (33),
- the total cross-sectional area of the nozzle holes (4a) of the second nozzle (4) is greater than the total cross-sectional area of the nozzle holes (3a) of the first nozzle (3), and
- the nozzle holes (4a) of the second nozzle (4) are arranged so that a greater part of the fuel injected through the second nozzle (4) is injected towards the intake valve side (25) than towards the exhaust valve side (26) of the cylinder (33).

2. An arrangement according to claim 1, wherein the nozzle holes (4a) of the second nozzle (4) are configured so that at most 75 percent of the fuel injected through the second nozzle (4) is injected towards the intake valve side (25) of the cylinder (33).

3. An arrangement according to claim 1 or 2, wherein the spray pattern of the fuel injected through the second nozzle (4) is asymmetric in respect of the imaginary plane (27).

4. An arrangement according to any of the preceding claims, wherein the spray pattern of the fuel injected through the second nozzle (4) is asymmetric in respect of a center plane of the second nozzle (4), which center plane is parallel to the imaginary plane (27) dividing the cylinder (33) into two sections (25, 26).

5. An arrangement according to any of the preceding claims, wherein the first nozzle (3) is located on the exhaust valve side (26) and the second nozzle (4) is located on the intake valve side (25) of the imaginary plane (27).

6. An arrangement according to any of the preceding claims, wherein a greater number of nozzle holes (4a) of the second nozzle (4) face the intake valve side (25) than the exhaust valve side (26) of the cylinder (33).

7. An arrangement according to any of the preceding claims, wherein each of those nozzle holes (4a) of the second nozzle (4) that face the intake valve side (25) has a greater cross-sectional area than any of those nozzle holes (4a) of the second nozzle (4) that face the exhaust valve side (26) of the cylinder (33).

8. An arrangement according to any of the preceding claims, wherein the individual cross-sectional areas of those nozzle holes (4a) of the second nozzle (4) that face the exhaust valve side (26) are 5-20 percent smaller than the individual cross-sectional areas of those nozzle holes (4a) of the second nozzle (4) that face the intake valve side (25) of the cylinder (33).

9. An arrangement according to any of the preceding claims, wherein the imaginary plane (27) divides the cylinder (33) into two halves (25, 26) of equal size.

10. An arrangement according to any of the preceding claims, wherein the angle (α) between a radial direction of the cylinder (33) and the injection direction of those nozzle holes (4a) of the second nozzle (4) that face the exhaust valve side (26) of the cylinder (33) is different than the angle between the radial direction of the cylinder (33) and the injection direction of those nozzle holes (4a) of the second nozzle (4) that face the intake valve side (25) of the cylinder (33).

11. An arrangement according to any of the preceding claims, wherein the angle (α) between a radial direction of the cylinder (33) and the injection direction of those nozzle holes (4a) of the second nozzle (4) that face the exhaust valve side (26) of the cylinder (33) is greater than the angle between the radial direction of the cylinder (33) and the injection direction of those nozzle holes (4a) of the second nozzle (4) that face the intake valve side (25) of the cylinder (33).

12. An arrangement according to any of the preceding claims, wherein the nozzle holes (3a) of the first nozzle (3) are arranged so that a greater part of the fuel injected through the first nozzle (3) is injected towards the exhaust valve side (26) than towards the intake valve side (25) of the cylinder (33).

13. A four-stroke piston engine, wherein the engine comprises a fuel injection arrangement according to any of the preceding claims.

14. A method of operating a piston engine comprising a fuel injection arrangement according to any of claims 1-12, wherein fuel is injected into the cylinder (33) using only the first nozzle (3) when the engine load is below a predetermined limit value and fuel is injected into the cylinder (33) using at least the second nozzle (4) when the engine load is above the predetermined limit value.

15. A method according to claim 14, wherein the fuel is injected into the cylinder (33) using only the second nozzle (4) when the engine load is above the predetermined limit value.

## Patentansprüche

1. Kraftstoffeinspritzanordnung für einen Zylinder (33) eines Viertakt-Kolbenmotors, wobei der Zylinder (33) mit zwei Einlassventilen (15), die auf einer Einlassventilseite (25) einer imaginären Ebene (27) angeordnet sind, der parallel zur Achsrichtung des Zylinders (33) verläuft und den Zylinder (33) in zwei Abschnitte (25, 26) teilt, und mit zwei Auslassventilen (16) versehen ist, die auf einer Auslassventilseite (26) der imaginären Ebene (27) angeordnet sind, wobei die Anordnung Folgendes umfasst
- eine erste Kraftstoffeinspritzdüse (3), die eine Vielzahl von Düsenlöchern (3a) umfasst,
- eine zweite Kraftstoffeinspritzdüse (4), die eine Vielzahl von Düsenlöchern (4a) umfasst,
- eine erste Einspritznadel (7) zum Steuern der Kraftstoffeinspritzung durch die erste Düse (3), und
- eine zweite Einspritznadel (8) zum Steuern der Kraftstoffeinspritzung durch die zweite Düse (4),
wobei
- beide Kraftstoffeinspritzdüsen (3, 4) so konfiguriert sind, dass sie flüssigen Kraftstoff direkt in den Zylinder (33) einspritzen,
- die Gesamtquerschnittsfläche der Düsenlöcher (4a) der zweiten Düse (4) größer ist als die Gesamtquerschnittsfläche der Düsenlöcher (3a) der ersten Düse (3), und
- die Düsenlöcher (4a) der zweiten Düse (4) so angeordnet sind, dass ein größerer Teil des durch die zweite Düse (4) eingespritzten Kraftstoffs zur Einlassventilseite (25) hin eingespritzt wird als zur Auslassventilseite (26) des Zylinders (33).

2. Anordnung nach Anspruch 1, wobei die Düsenlöcher (4a) der zweiten Düse (4) konfiguriert sind, so dass höchstens 75 Prozent des durch die zweite Düse (4) eingespritzten Kraftstoffs zur Einlassventilseite (25) des Zylinders (33) eingespritzt werden.

3. Anordnung nach Anspruch 1 oder 2, wobei das Sprühmuster des durch die zweite Düse (4) eingespritzten Kraftstoffs asymmetrisch in Bezug auf die imaginäre Ebene (27) ist.

4. Anordnung nach einem der vorhergehenden Ansprüche, wobei das Sprühmuster des durch die zweite Düse (4) eingespritzten Kraftstoffs in Bezug auf eine Mittelebene der zweiten Düse (4) asymmetrisch ist, wobei die Mittelebene parallel zu der imaginären Ebene (27) ist, die den Zylinder (33) in zwei Abschnitte (25, 26) teilt.

5. Anordnung nach einem der vorangehenden Ansprüche, wobei die erste Düse (3) auf der Auslassventilseite (26) angeordnet ist und die zweite Düse (4) auf der Einlassventilseite (25) der imaginären Ebene angeordnet ist (27) .

6. Anordnung nach einem der vorhergehenden Ansprüche, wobei eine größere Anzahl von Düsenlöchern (4a) der zweiten Düse (4) der Einlassventilseite (25) zugewandt ist als der Auslassventilseite (26) des Zylinders (33).

7. Anordnung nach einem der vorhergehenden Ansprüche, wobei jedes der Düsenlöcher (4a) der zweiten Düse (4), die der Einlassventilseite (25) zugewandt sind, eine größere Querschnittsfläche aufweist als irgendeines der Düsenlöcher (4a) der zweiten Düse (4), die der Auslassventilseite (26) des Zylinders (33) zugewandt sind.

8. Anordnung nach einem der vorhergehenden Ansprüche, wobei die einzelnen Querschnittsflächen derjenigen Düsenlöcher (4a) der zweiten Düse (4), die der Auslassventilseite (26) zugewandt sind, 5 bis 20 Prozent kleiner sind als die einzelnen Querschnittsflächen derjenigen Düsenlöcher (4a) der zweiten Düse (4), die der Einlassventilseite (25) des Zylinders (33) zugewandt sind.

9. Anordnung nach einem der vorhergehenden Ansprüche, wobei die imaginäre Ebene (27) den Zylinder (33) in zwei gleich große Hälften (25, 26) teilt.

10. Anordnung nach einem der vorhergehenden Ansprüche, wobei der Winkel (α) zwischen einer radialen Richtung des Zylinders (33) und der Einspritzrichtung jener Düsenlöcher (4a) der zweiten Düse (4), die der Auslassventilseite (26) des Zylinders (33) zugewandt sind, unterschiedlich ist als der Winkel zwischen der radialen Richtung des Zylinders (33) und der Einspritzrichtung jener Düsenlöcher (4a) der zweiten Düse (4), die der Einlassventilseite (25) des Zylinders (33) zugewandt sind.

11. Anordnung nach einem der vorhergehenden Ansprüche, wobei der Winkel (α) zwischen einer radialen Richtung des Zylinders (33) und der Einspritzrichtung jener Düsenlöcher (4a) der zweiten Düse (4), die der Auslassventilseite (26) des Zylinders (33) zugewandt sind, größer ist als der Winkel zwischen der radialen Richtung des Zylinders (33) und der Einspritzrichtung jener Düsenlöcher (4a) der zweiten Düse (4), die der Einlassventilseite (25) des Zylinders (33) zugewandt sind.

12. Anordnung nach einem der vorhergehenden Ansprüche, wobei die Düsenlöcher (3a) der ersten Düse (3) so angeordnet sind, dass ein größerer Teil des durch die erste Düse (3) eingespritzten Kraftstoffs zur Seite des Auslassventils (26) hin eingespritzt wird als zur Seite des Einlassventils (25) des Zylinders (33).

13. Viertakt-Kolbenmotor, wobei der Motor eine Kraftstoffeinspritzanordnung nach einem der vorhergehenden Ansprüche umfasst.

14. Verfahren zum Betreiben eines Kolbenmotors mit einer Kraftstoffeinspritzanordnung nach einem der Ansprüche 1 bis 12, wobei Kraftstoff in den Zylinder (33) nur unter Verwendung der ersten Düse (3) eingespritzt wird, wenn die Motorlast unter einer vorbestimmten Grenzwert liegt, und Kraftstoff in den Zylinder (33) unter Verwendung wenigstens der zweiten Düse (4) eingespritzt wird, wenn die Motorlast über dem vorbestimmten Grenzwert liegt.

15. Verfahren nach Anspruch 14, wobei der Kraftstoff in den Zylinder (33) unter Verwendung nur der zweiten Düse (4) eingespritzt wird, wenn die Motorlast über dem vorbestimmten Grenzwert liegt.

## Revendications

1. Ensemble d'injection de carburant pour un cylindre (33) d'un moteur à piston à quatre temps, le cylindre (33) étant doté de deux soupapes d'admission (15), qui sont agencées du côté soupape d'admission (25) d'un plan imaginaire (27) qui est parallèle à la direction axiale du cylindre (33) et divise le cylindre (33) en deux sections (25, 26), et de deux soupapes d'échappement (16), qui sont agencées du côté soupape d'échappement (26) dudit plan imaginaire (27), l'ensemble comprenant
- une première buse d'injection de carburant (3) comprenant une pluralité de trous de buse (3a),
- une seconde buse d'injection de carburant (4) comprenant une pluralité de trous de buse (4a),
- une première aiguille d'injecteur (7) pour commander l'injection de carburant à travers la première buse (3), et
- une seconde aiguille d'injecteur (8) pour commander l'injection de carburant à travers la seconde buse (4),
dans lequel
- les deux buses d'injection de carburant (3, 4) sont conçues pour injecter du carburant liquide directement dans le cylindre (33),
- la surface transversale totale des trous de buse (4a) de la seconde buse (4) est supérieure à la surface transversale totale des trous de buse (3a) de la première buse (3), et
- les trous de buse (4a) de la seconde buse (4) sont agencés de sorte qu'une plus grande partie du carburant injecté à travers la seconde buse (4) est injectée vers le côté soupape d'admission (25) que vers le côté soupape d'échappement (26) du cylindre (33) .

2. Ensemble selon la revendication 1, dans lequel les trous de buse (4a) de la seconde buse (4) sont conçus de sorte qu'au plus 75 pour cent du carburant injecté à travers la seconde buse (4) est injecté vers le côté soupape d'admission (25) du cylindre (33).

3. Ensemble selon la revendication 1 ou 2, dans lequel le motif de pulvérisation du carburant injecté à travers la seconde buse (4) est asymétrique par rapport au plan imaginaire (27).

4. Ensemble selon l'une quelconque des revendications précédentes, dans lequel le motif de pulvérisation du carburant injecté à travers la seconde buse (4) est asymétrique par rapport à un plan central de la seconde buse (4), lequel plan central est parallèle au plan imaginaire (27) divisant le cylindre (33) en deux sections (25, 26) .

5. Ensemble selon l'une quelconque des revendications précédentes, dans lequel la première buse (3) est située du côté soupape d'échappement (26) et la seconde buse (4) est située du côté soupape d'admission (25) du plan imaginaire (27).

6. Ensemble selon l'une quelconque des revendications précédentes, dans lequel un plus grand nombre de trous de buse (4a) de la seconde buse (4) sont tournés vers le côté soupape d'admission (25) que vers le côté soupape d'échappement (26) du cylindre (33).

7. Ensemble selon l'une quelconque des revendications précédentes, dans lequel chacun de ces trous de buse (4a) de la seconde buse (4) qui sont tournés vers le côté soupape d'admission (25) a une surface transversale plus grande que celle de n'importe lequel de ces trous de buse (4a) de la seconde buse (4) qui sont tournés vers le côté soupape d'échappement (26) du cylindre (33) .

8. Ensemble selon l'une quelconque des revendications précédentes, dans lequel les surfaces transversales individuelles de ces trous de buse (4a) de la seconde buse (4) qui sont tournés vers le côté soupape d'échappement (26) sont 5 à 20 pour cent plus petites que les surfaces transversales individuelles de ces trous de buse (4a) de la seconde buse (4) qui sont tournés vers le côté soupape d'admission (25) du cylindre (33) .

9. Ensemble selon l'une quelconque des revendications précédentes, dans lequel le plan imaginaire (27) divise le cylindre (33) en deux moitiés (25, 26) de taille égale.

10. Ensemble selon l'une quelconque des revendications précédentes, dans lequel l'angle (α) entre une direction radiale du cylindre (33) et la direction d'injection de ces trous de buse (4a) de la seconde buse (4) qui sont tournés vers le côté soupape d'échappement (26) du cylindre (33) est différent de l'angle entre la direction radiale du cylindre (33) et la direction d'injection de ces trous de buse (4a) de la seconde buse (4) qui sont tournés vers le côté soupape d'admission (25) du cylindre (33).

11. Ensemble selon l'une quelconque des revendications précédentes, dans lequel l'angle (α) entre une direction radiale du cylindre (33) et la direction d'injection de ces trous de buse (4a) de la seconde buse (4) qui sont tournés vers le côté soupape d'échappement (26) du cylindre (33) est supérieur à l'angle entre la direction radiale du cylindre (33) et la direction d'injection de ces trous de buse (4a) de la seconde buse (4) qui sont tournés vers le côté soupape d'admission (25) du cylindre (33).

12. Ensemble selon l'une quelconque des revendications précédentes, dans lequel les trous de buse (3a) de la première buse (3) sont agencés de sorte qu'une plus grande partie du carburant injecté à travers la première buse (3) est injectée vers le côté soupape d'échappement (26) que vers le côté soupape d'admission (25) du cylindre (33) .

13. Moteur à piston à quatre temps, dans lequel le moteur comprend un ensemble d'injection de carburant selon l'une quelconque des revendications précédentes.

14. Procédé de fonctionnement d'un moteur à piston comprenant un ensemble d'injection de carburant selon l'une quelconque des revendications 1 à 12, dans lequel le carburant est injecté dans le cylindre (33) en utilisant uniquement la première buse (3) lorsque la charge du moteur est inférieure à une valeur limite prédéterminée et le carburant est injecté dans le cylindre (33) en utilisant au moins la seconde buse (4) lorsque la charge du moteur est supérieure à la valeur limite prédéterminée.

15. Procédé selon la revendication 14, dans lequel le carburant est injecté dans le cylindre (33) en utilisant uniquement la seconde buse (4) lorsque la charge du moteur est supérieure à la valeur limite prédéterminée.
